# EUROPEAN PATENT APPLICATION

(11) **EP 4 674 931 A1**
(43) Date of publication of application: **07.01.2026**
(21) Application number: 24306122.3
(22) Date of filing: 05.07.2024
(51) Int. Cl.: C10L 3/10, C10G 9/16, C10G 29/22, C10G 75/04, C10L 10/04, C10L 10/06, C09K 8/532, B01D 53/14

(54) **USE OF AT LEAST ONE ADDITIVE COMPOSITION COMPRISING A MIXTURE OF CARBOXYLIC ACIDS AND AT LEAST ONE ORGANIC SOLVENT FOR THE TREATMENT OF DEPOSITS**

(71) Applicant: TotalEnergies OneTech, 92400 Courbevoie (FR)
(72) Inventor: TORT, Frédéric, 69360 Solaize (FR); MONDKAR, Hemant Sunanda Surendra, 69360 Solaize (FR); FRETARD, David, 69360 Solaize (FR)
(74) Representative: Casalonga

(57) **Abstract**

The present invention is directed to the use of at least one additive composition comprising at least mixture of acids and at least one organic solvent for treating deposits containing at least reaction products of triazines and hydrogen sulphide and/or organic compounds comprising at least one sulfhydryl group, contained in a liquid and/or gaseous stream.

## Description

The present invention deals with the use of at least one additive composition comprising at least a mixture of carboxylic acids as defined hereafter and at least one organic solvent for the treatment of deposits containing at least reaction products of triazines or hydrogen sulphide scavengers (H2S scavengers) based on the reaction of alkanolamine and formaldehyde, with hydrogen sulphide and/or organic compounds comprising at least one sulfhydryl group, contained in a liquid and/or gaseous stream. The liquid and/or gaseous stream is preferably a hydrocarbon stream, more preferably a hydrocarbon gas stream.

The instant invention further pertains to a method for treating deposits containing at least reaction products of triazines or H2S scavengers based on the reaction of alkanolamine and formaldehyde, and sulfur-based species, as previously defined, contained in a liquid and/or gaseous stream, comprising adding at least one additive composition as previously defined to an oil and/or gas installation.

### PRIOR ART AND BACKGROUND OF THE INVENTION

The presence of sulfur-based species, particularly hydrogen sulphide (H2S) and/or organic compounds comprising a sulfhydryl group (-SH), such as mercaptans, in liquid and/or gas hydrocarbon streams, generally raises myriads of issues in various industries. These sulfur-based components may be responsible for causing significant health hazards to the operators, seriously compromising their safety, as well as lasting damages to equipment, and adverse effects on the environment.

Indeed, hydrogen sulphide is a colourless and highly toxic, flammable and corrosive gas which has a characteristic odour even at a very low concentration. Hydrogen sulphide dissolves easily in liquid and gaseous streams such as hydrocarbon and water streams and can also be present in the vapour phase above liquid streams as well as in hydrocarbon gas such as LPG and natural gas. The hydrogen sulphide emissions can be harmful to workers operating in the drilling, production, transport, completion, storage and processing of such streams as its inhalation can lead to unconsciousness, coma, and even death. It is therefore desirable for the operators' comfort and safety to reduce or even eliminate the hydrogen sulphide emissions during the handling said products.

Legislation has been in place for years, imposing strict regulations on hydrogen sulphide levels of hydrocarbon streams in pipelines, in storage and shipping containers.

Furthermore, in the oil and/or gas industry, hydrogen sulphide in crude oil and/or natural gas, even at low concentrations, often leads to embrittlement and/or sour corrosion of the steel used as a material for casing and/or feed pipes. Consequently, the oil and/or gas equipment becomes partially or totally unusable and must be replaced over time causing heavy financial losses.

Hydrogen sulphide is also detrimental to environment, especially to marine environment.

Similar problems arise with organic compounds comprising a sulfhydryl group (-SH) such as mercaptans R-SH, thiocarboxylic acids RC(O)SH, dithiocarboxylic acids RC(S)SH, with R denoting a hydrocarbon chain. Such sulfhydryl-containing compounds are very corrosive, and are likely to release hydrogen sulphide.

A variety of chemical scavengers are available to reduce the concentration of hydrogen sulphide and sulfhydryl-containing compounds in liquid and gaseous streams containing them, in particular aqueous streams and hydrocarbon streams such as gas, crude oils and refined products. Some of the most common methods for treating hydrogen sulphide consist in contacting them with a chemical scavenger such as compounds containing a triazine group, glyoxal, reaction products of alkanolamine and formaldehyde, as well as metal-based scavengers. Glyoxal has been used extensively as hydrogen sulphide scavenger but suffers from a major drawback since aqueous glyoxal solutions are highly corrosive and cannot be used for a gas tower application. Triazines, such as monoethanolamine triazine (MEA-triazine) or monomethyl amine triazine (MMA-triazine), have recently become one of the most common chemical scavengers used for treating hydrogen sulphide from hydrocarbon streams.

However, the use of triazine, especially MEA-triazine, as hydrogen sulphide scavenger has the drawback of leading to the formation of solid deposits, which probably at least for a part thereof result from the further reaction and polymerization of MEA-dithiazine which is the product of reaction of MEA-triazine with H₂S. The deposits mainly contain stable and water-insoluble solid compounds which can precipitate and accumulate, especially in the devices and installations used in an oil and/or gas installation, specifically on the surfaces of a sour gas production and treatment unit of a gas installation intended for producing natural gas. Indeed, these deposits may induce significant pressure variations within the sour gas production and treatment unit, which can lead to its embrittlement and sustainable damages.

It turns out that these solid deposits are difficult to remove other than by mechanical operations. It bespeaks when such solid deposits occur, operators need to stop the oil and/or gas plant operations for several days to give them enough time to mechanically dismantle the soiled parts of the installation and initiate the mechanical cleaning of these parts to remove said solid deposits.

In other words, the oil and/or gas plant operations must be shut down for several days leading to heavy financial losses caused by loss of oil and/or gas production.

Furthermore, such maintenance operation is generally performed several times to efficiently remove the solid deposits on the soiled parts of the installation.

Hence, fouling or deposit formations linked with the hydrogen sulphide elimination treatments necessary in oil and/or gas production may hinder oil and/or gas productivity, lead to heavy financial losses, and shorten the lifetime of some of the devices of the oil and/or gas installation, especially the sustainability of a sour gas production and treatment unit. In addition, fouling can build-up on the surfaces of any part of the oil and/or gas production installation in the same conditions as in the sour gas production and treatment unit.

In the same manner, these shortcomings are also experienced with other H2S scavengers, such as reaction products between alkanolamine and formaldehyde.

Therefore, it remains a real need to implement an efficient treatment against solid deposits, including deposits resulting from the reaction between hydrogen sulphide (H2S) and/or organic compounds comprising a sulfhydryl group (-SH) contained in liquid and/or gaseous streams, with triazines, such as MEA-triazine or reaction products of alkanolamine and formaldehyde, without impairing the operation sequences in an oil and/or gas installation.

Indeed, one of the purposes of the present invention is to avoid or reduce solid deposits resulting at least from the reaction between triazines, especially MEA-triazine, or reaction products of alkanolamine and formaldehyde, and hydrogen sulphide (H2S) and/or organic compounds comprising a sulfhydryl group (-SH) contained in liquid and/or gaseous streams, in order to limit the maintenance operations in an oil and/or gas installation, especially their duration and their numbers, and avoid shutdown of the oil and/or gas installation.

More specifically one of the goals of the present invention is to avoid and reduce solid deposits resulting at least from the reaction between MEA-triazine and a hydrogen sulphide (H2S)- containing gaseous stream, which are present in a sour gas production and treatment unit, while ensuring safety conditions for the operators and the environment, especially to the marine environment, without soaring the costs.

### OBJECT OF THE INVENTION

The present invention namely results from the unexpected findings, by the inventors, that an additive composition comprising at least a mixture of carboxylic acids, as defined below, and at least one organic solvent, is particularly efficient to treat, especially to prevent, reduce and/or remove, deposits resulting at least from the reaction between triazines, especially MEA-triazine, or reaction products of alkanolamine and formaldehyde, and hydrogen sulphide (H2S) and/or organic compounds comprising at least one sulfhydryl group (-SH), that are contained in liquid and/or gaseous streams, that may form on any part of an oil and/or gas installation.

Therefore, the present invention relates to the use of at least one additive composition for treating deposits containing at least reaction products of triazines, especially MEA-triazine, or reaction products of alkanolamine and formaldehyde, and hydrogen sulphide and/or organic compounds comprising at least one sulfhydryl group, contained in a liquid and/or gaseous stream, said composition comprising:
(a) at least one fatty carboxylic acid comprising at least one fatty chain containing at least 8 carbon atoms, and
(b) at least one mono- or polycarboxylic acid comprising at least one hydrocarbon chain containing from 1 to 7 carbon atoms
(c) at least one organic solvent.

The use of said composition enables to treat, especially to prevent, reduce and/or remove, inorganic and/or organic deposits, including deposits formed at least from the reaction between triazines, especially MEA-triazine, or reaction products of alkanolamine and formaldehyde, and said sulfur-based species, contained in a liquid and/or gaseous stream, that may form on any part of an oil and/or gas installation without impairing at least one of its operation sequences, namely by avoiding its shutdown and limiting the maintenance operations.

According to the present invention, the deposits treated include deposits formed at least from the reaction between triazines and said sulfur-based species and deposits formed at least from the reaction between reaction products of alkanolamine and formaldehyde and said sulfur-based species.

In other words, the deposits treated include deposits formed at least from the reaction between triazines and hydrogen sulphide, deposits formed at least from the reaction between triazines and organic compounds comprising at least one sulfhydryl group, deposits formed at least from the reaction between reaction products of alkanolamine and formaldehyde and hydrogen sulphide, and/or deposits formed at least from the reaction between reaction products of alkanolamine and formaldehyde and organic compounds comprising at least one sulfhydryl group.

Advantageously, said composition is used to treat deposits obtained by the reaction between triazines, preferably MEA-triazine, and hydrogen sulphide (H2S), contained in a liquid and/or gaseous stream, preferably in a hydrocarbon gas stream, more preferably in a sour gas stream, which may form on any part of at least one oil and/or gas installation, preferably in at least one sour gas production and treatment unit of a gas installation, namely intended for natural gas production.

In other words, said composition is especially used to treat deposits containing reaction products of triazines, preferably MEA-triazine, and hydrogen sulphide, contained in a liquid and/or gaseous stream, preferably in a hydrocarbon gas stream, more preferably in a sour gas stream, formed in at least one gas installation for natural gas production.

The composition according to the present invention exhibits the asset of being easy to apply on all oil and/or gas installations, including equipment for oil and/or gas production, drilling, storage, completion and/or transportation, preferably a sour gas production and treatment unit, without high level of material investment.

Therefore, the use of said composition reduces maintenance operations of at least one oil and/or gas installation soiled by said deposits, especially their duration and/or their numbers, and avoids shutdown of the oil and/or gas installation.

Especially, the use of said composition reduces mechanical maintenance operations of at least one oil and/or gas installation soiled by said deposits.

In other words, the use of said composition is an efficient chemical treatment that minimizes the need for mechanical cleaning of the oil and/or gas installation.

Hence, the use of said composition displays the assets of saving costs as the maintenance operations for cleaning said insoluble deposits are limited and the risks of oil and/or gas production losses are curbed.

Thus, said composition helps to improve oil and/or gas productivity of an oil and/or gas production installation.

As a result, the composition according to the present invention allows the use of triazines, preferably MEA-triazine, or reaction products of alkanolamine and formaldehyde, to capture efficiently sulfur-based species, especially hydrogen sulphide, while controlling deposits formation in at least one oil and/or gas installation, especially in at least one sour gas production and treatment unit of a gas installation, namely intended for natural gas production.

The composition according to the present invention further exhibits the asset of reducing the delta pressure in a sour gas treatment and production unit in an at least one gas installation, especially the delta pressure of a glycol contactor internal cooler (GCIC) and/or a High-Pressure Cooler, therefore reducing the risks of their embrittlement.

In other words, the use of said composition allows to extend the lifetime of the devices and installations used in an oil and/or gas installation, especially the lifetime of a sour gas treatment and production unit.

The composition according to the invention further displays a good ecotoxicity profile ensuring safety conditions for the environment, specifically to the marine environment.

Indeed, said composition advantageously encompasses bio-based compounds, especially vegetable-based compounds.

Another subject-matter of the present invention relies on a method for treating deposits containing at least reaction products of triazines, especially MEA-triazine, or reaction products of alkanolamine and formaldehyde, preferably MEA-triazine, and sulfur-based species, as previously defined, contained in a liquid and/or gaseous stream, comprising adding at least one additive composition as previously defined to an oil and/or gas installation.

Preferably, said method treats deposits containing at least reaction products of triazines and sulfur-based species, as previously defined, contained in a liquid and/or gaseous stream.

Other objects, features, aspects and advantages of the invention will become more apparent upon reading the following description and examples.

In the following, and at least one other indication, the limits of a value range are included within this range, particularly in the expressions "between" and "ranging from ... to ...".

Moreover, the expressions "at least one" and "at least" used in the present description are respectively equivalent to the expressions "one or more" and "more than or equal to".

Finally, in a manner known per se, Cₙ compound or group designates a compound or a group containing in its chemical structure n carbon atoms.

### DETAILED DESCRIPTION

### Additive composition

As previously defined, the additive composition of the present invention comprises:
(a) at least one fatty carboxylic acid comprising at least one fatty chain containing at least 8 carbon atoms, and
(b) at least one mono- or polycarboxylic acid comprising at least one hydrocarbon chain containing from 1 to 7 carbon atoms,
(c) at least one organic solvent.

The fatty chain of the carboxylic acid (a) may contain from 8 to 30 carbon atoms, preferably from 12 to 24 carbon atoms, more preferably from 12 to 20 carbon atoms, even more preferably from 14 to 20 carbon atoms.

The fatty carboxylic acid (a) may be chosen among the group consisting of the compounds having the formula R₁-C(O)OH wherein Ri denotes a hydrocarbon group containing at least 8 carbon atoms.

The fatty carboxylic acid (a) may be chosen among the group consisting of the compounds having the formula R₁-C(O)OH wherein Ri represents a linear or branched, saturated or unsaturated, alkyl group comprising at least 8 carbon atoms, preferably from 8 to 30 carbon atoms, more preferably from 12 to 24 carbon atoms, especially from 12 to 20 carbon atoms and specifically from 14 to 20 carbon atoms.

Preferably, the fatty carboxylic acid (a) is chosen among the group consisting of the compounds having the formula R₁-C(O)OH wherein Ri represents a linear, saturated or unsaturated, alkyl group comprising at least 8 carbon atoms, preferably from 8 to 30 carbon atoms, more preferably from 12 to 24 carbon atoms, especially from 12 to 20 carbon atoms and specifically from 14 to 20 carbon atoms.

More preferably, the fatty carboxylic acid (a) is chosen among the group consisting of the compounds having the formula R₁-C(O)OH wherein Ri represents a linear, saturated or unsaturated, alkyl group comprising from 12 to 24 carbon atoms, especially from 12 to 20 carbon atoms and specifically from 14 to 20 carbon atoms.

Even more preferably, the fatty carboxylic acid (a) is chosen among the group consisting of the compounds having the formula R₁-C(O)OH wherein Ri represents a linear and unsaturated alkyl group comprising from 12 to 24 carbon atoms, especially from 12 to 20 carbon atoms and specifically from 14 to 20 carbon atoms.

The fatty carboxylic acid (a) is preferably a liquid fatty carboxylic acid.

For the purposes of the present invention, the term "liquid fatty acid" means a fatty carboxylic acid having a melting point below or equal to 25°C, preferably below or equal to 20°C at atmospheric pressure (1.013×10⁵ Pa).

The fatty carboxylic acid (a) may be chosen among the group consisting of oleic acid, linoleic acid, arachidonic acid, isostearic acid, isopalmitic acid, and mixtures thereof, preferably oleic acid.

The fatty carboxylic acid (a) is advantageously from natural origin, preferably based on bio-based fatty carboxylic acids.

The fatty carboxylic acid (a) is especially chosen from plant-based fatty carboxylic acids.

As previously defined, the mono- or polycarboxylic acid (b) comprises at least one hydrocarbon group containing from 1 to 7 carbon atoms.

Preferably, the mono- or polycarboxylic acid (b) comprises at least one hydrocarbon group containing from 1 to 5 carbon atoms, especially from 1 to 4 carbon atoms.

According to the present invention, the mono- or polycarboxylic acid (b) may be chosen from monocarboxylic acids, polycarboxylic acids, and mixtures thereof.

Preferably, the mono- or polycarboxylic acid (b) may be chosen among mono- or dicarboxylic acids, preferably from the group consisting of monocarboxylic acids.

The monocarboxylic acid (b) may be chosen among the group consisting of the compounds having the formula R₂-C(O)OH wherein R₂ represents a linear or branched, saturated or unsaturated, alkyl group comprising from 1 to 6 carbon atoms, preferably from 1 to 5 carbon atoms, more preferably from 1 to 3 carbon atoms.

The monocarboxylic acid (b) is preferably chosen among the group consisting of propionic acid, acetic acid, or mixture thereof, especially propionic acid.

The dicarboxylic acid (b) may be chosen among the group consisting of the compounds having the formula HO(O)C-R'₂-C(O)OH wherein R'₂ represents a linear or branched, saturated or unsaturated, alkylene group comprising from 1 to 5 carbon atoms, preferably from 1 to 4 carbon atoms, more preferably from 1 to 2 carbon atoms or a covalent bond between the two carboxylic groups (-C(O)OH).

The dicarboxylic acid (b) is preferably chosen among the group consisting of propanedioic acid, pentanedioic acid, butanedioic acid, ethanedioic acid, or mixture thereof, especially chosen among the group consisting of propanedioic acid, ethanedioic acid, or mixture thereof.

The mono- or polycarboxylic acid (b) may preferably be chosen among the group consisting of propionic acid, acetic acid, propanedioic acid, pentanedioic acid, butanedioic acid, ethanedioic acid, or mixture thereof, especially chosen among the group consisting of propionic acid, acetic acid, or mixture thereof, specifically propionic acid.

The composition according to the present invention may comprise said fatty carboxylic acid (a) and mono- or polycarboxylic acid (b) in a ratio by mass (a):(b) ranging from more than 50:50 to 95:5, preferably from 60:40 to 90:10, more preferably from 70:30 to 85:15, even more preferably is in a ratio of 80:20.

The composition according to the present invention may preferably comprise said fatty carboxylic acid (a) and monocarboxylic acid (b) in a ratio by mass (a):(b) ranging from more than 50:50 to 95:5, preferably from 60:40 to 90:10, more preferably from 70:30 to 85:15, even more preferably is in a ratio of 80:20.

The composition according to the present invention further comprises (c) at least one organic solvent.

The organic solvent (c) is preferably a liquid organic solvent.

By liquid, it is meant a solvent which is in liquid form at ambient temperature (20°C) and atmospheric pressure (1,013.10⁵ Pa).

Preferably, the organic solvent is an aromatic solvent, especially comprising from 6 to 18 carbon atoms, specifically comprising from 8 to 16 carbon atoms.

Preferably, the composition according to the present invention is a liquid organic aromatic solvent comprising from 6 to 18 carbon atoms, more preferably from 8 to 16 carbon atoms.

Preferably, the aromatic solvent is Heavy aromatic Naphta (or HAN).

HAN is a mixture of hydrocarbons obtained by the distillation of aromatic fraction. HAN consists predominantly of, preferably consists of, aromatic hydrocarbons having a carbon number between 9 and 16, preferably between 9 and 11, and having a boiling point, measured at atmospheric pressure (1,013.10⁵ Pa), comprised between 165°C and 290°C, preferably between 181 and 205°C. HAN is a liquid solvent.

In particular, the organic solvent (c), preferably organic hydrocarbon solvent, more preferably aromatic solvent, preferably HAN, is used in a weight ratio [fatty carboxylic acid (a) + mono-or polycarboxylic acid (b)] / organic solvent (c) ranging from 20/80 to 90/10, in particular 30/70 to 15/85 and more particularly 45/55 to 20/80, especially40/60 to 30/70.

In other words, said fatty carboxylic (a), mono-or polycarboxylic acid (b) and organic solvent (c) are present in the instant composition in weight ratio [(a)+(b)]/(c) ranging from 20/80 to 90/10, in particular 45/55 to 20/80, and more particularly 45/55 to 20/80, especially 40/60 to 30/70.

The formulated composition of the invention preferably comprises an amount of aromatic solvent(s), preferably HAN, in a weight ratio [fatty carboxylic acid (a) + mono-or polycarboxylic acid (b)]/ aromatic solvent (c) ranging from 20/80 to 90/10, in particular 45/55 to 20/80, and more particularly 45/55 to 20/80, especially 40/60 to 30/70., relative to the total weight of the composition.

The composition according to the present invention may further comprise (d) least one organic additive different from the mixture of carboxylic acids as previously defined.

The organic additive may be chosen among the group consisting of antifoam; demulsifier; corrosion inhibitor; biocide; asphaltene inhibitor; H2S scavenger; wax inhibitor, and mixtures thereof.

Preferably, the composition according to the present invention comprises:
(a) at least one fatty carboxylic acid having the formula R₁-C(O)OH wherein Ri denotes a hydrocarbon group containing from 12 to 24 carbon atoms, more preferably from 12 to 20 carbon atoms, even more preferably from 14 to 20 carbon atoms,
(b) at least one monocarboxylic acid having the formula R₂-C(O)OH wherein R₂ represents a linear or branched, saturated or unsaturated, alkyl group comprising from 1 to 7 carbon atoms, preferably from 1 to 5 carbon atoms, more preferably from 1 to 4 carbon atoms and/or dicarboxylic acid (b) may be chosen among the group consisting of the compounds having the formula HO(O)C-R'₂-C(O)OH wherein R'₂ represents a linear or branched, saturated or unsaturated, alkylene group comprising from 1 to 5 carbon atoms, preferably from 1 to 4 carbon atoms, more preferably from 1 to 2 carbon atoms or a covalent bond between the two carboxylic groups (-C(O)OH),
(c) at least one aromatic solvent.

According to this preferred embodiment, said fatty carboxylic acid (a) and mono- or polycarboxylic acid (b) are preferably in a ratio by mass (a):(b) ranging from 40:60 to 10: 90, more preferably from 30:70 to 15:85.

Preferably, the composition according to the present invention comprises:
(a) at least one fatty carboxylic acid having the formula R₁-C(O)OH wherein Ri denotes a hydrocarbon group containing from 12 to 24 carbon atoms, more preferably from 12 to 20 carbon atoms, even more preferably from 14 to 20 carbon atoms,
(b) at least one monocarboxylic acid having the formula R₂-C(O)OH wherein R₂ represents a linear or branched, saturated or unsaturated, alkyl group comprising from 1 to 7 carbon atoms, preferably from 1 to 5 carbon atoms, more preferably from 1 to 4 carbon atoms,
(c) at least one aromatic solvent especially a HAN solvent.

According to this preferred embodiment, said fatty carboxylic acid (a) and monocarboxylic acid (b) are preferably in a ratio by mass (a):(b) ranging from 40:60 to 10: 90, more preferably from 30:70 to 15:85.

Preferably, the composition according to the present invention comprises:
(a) at least one fatty carboxylic acid having a fatty chain chosen in the group consisting of oleic acid, linoleic acid, arachidonic acid, isostearic acid, isopalmitic acid, and mixtures thereof, preferably oleic acid,
(b) at least one mono-or polycarboxylic acid chosen among the group consisting of propionic acid, acetic acid, propanedioic acid, pentanedioic acid, butanedioic acid, ethanedioic acid, or mixture thereof, especially chosen among the group consisting of propionic acid, acetic acid, or mixture thereof, specifically acetic acid,
(c) at least one aromatic solvent, preferably a HAN solvent.

### Use of said composition

As previously defined, the additive composition of the present invention is used to treat at least deposits containing at least reaction products of triazines, especially MEA-triazine, or reaction products of alkanolamine and formaldehyde, and hydrogen sulphide (H2S) and/or organic compounds comprising at least one sulfhydryl group (-SH), contained in a liquid and/or gaseous stream, preferably a hydrocarbon stream, more preferably a hydrocarbon gas stream.

Preferably, said additive composition is used to prevent, reduce and/or remove deposits containing at least reaction products of triazines, especially MEA-triazine, or reaction products of alkanolamine and formaldehyde, and hydrogen sulphide (H2S) and/or organic compounds comprising at least one sulfhydryl group (-SH), contained in a liquid and/or gaseous stream, especially a hydrocarbon stream such as a hydrocarbon gas stream.

More preferably, said additive composition is used to prevent, reduce and/or remove deposits containing at least reaction products of triazines, especially MEA-triazine, and hydrogen sulphide (H2S) and/or organic compounds comprising at least one sulfhydryl group (-SH), contained in a gaseous stream, especially a hydrocarbon gas stream.

Advantageously, said additive composition is used to treat deposits containing at least reaction products of triazines, especially MEA-triazine, and hydrogen sulphide (H2S) and/or organic compounds comprising at least one sulfhydryl group (-SH), contained in a liquid and/or gaseous stream, in an at least one oil and/or gas installation.

Still advantageously, said additive composition is used to treat deposits containing reaction products of MEA-triazine and hydrogen sulphide (H2S) and/or organic compounds comprising at least one sulfhydryl group (-SH), contained in a gaseous stream, preferably a hydrocarbon gas stream, in an at least one sour gas production and treatment unit.

Still advantageously, said additive composition is used to treat deposits containing at least reaction products of MEA-triazine and hydrogen sulphide (H2S), contained in a gaseous stream, preferably a hydrocarbon gas stream, in an at least one sour gas production and treatment unit.

In other words, the additive composition is used to treat, especially prevent, reduce and/or remove, deposits obtained from at least the reaction between triazines, especially MEA-triazine, or reaction products of alkanolamine and formaldehyde, and hydrogen sulphide (H2S) and/or organic compounds comprising at least one sulfhydryl group (-SH), contained in a liquid and/or gaseous stream, especially a hydrocarbon stream such as a hydrocarbon gas stream.

In other words, the additive composition is used to prevent or reduce, the formation of deposits in the scavenging of hydrogen sulphide and/or organic compounds comprising at least one sulfhydryl group, contained in a liquid and/or gaseous stream, with triazines, especially monoethanolamine triazine, or reaction products of alkanolamine and formaldehyde.

Preferably, the additive composition is used to prevent or reduce the formation of deposits in the scavenging of hydrogen sulphide and/or organic compounds comprising at least one sulfhydryl group, contained in a gaseous stream, especially a hydrocarbon gas stream, with triazines, especially monoethanolamine triazine, or reaction products of alkanolamine and formaldehyde, in at least one sour gas production and treatment unit.

The deposits treated using said additive composition comprise at least reaction products of triazines, especially MEA-triazine, or reaction products of alkanolamine and formaldehyde, and said sulfur-based species.

In other words, the deposits treated using said additive composition are deposits comprising at least reaction products of sulfur-based species as previously defined and triazines, especially MEA-triazine; deposits comprising at least reaction products of sulfur-based species as previously defined and sulfur-based species scavengers based on the reaction of alkanolamine and formaldehyde.

According to the present invention, triazines are triazines sulfur-based species scavengers, that it is say sulfur-based species scavengers chosen from triazines. Preferably, triazines are triazines H2S scavengers.

According to the present invention, sulfur-based species scavengers are chosen among the group consisting of triazines or reaction products of alkanolamine and formaldehyde, preferably triazines.

Preferably, the deposits comprise at least reaction products of sulfur-based species as previously defined and triazines, especially MEA-triazine.

Preferably, the deposits consist of reaction products of triazines, preferably MEA-triazine, and said sulfur-based species, especially hydrogen sulphide and/or organic compounds comprising at least one sulfhydryl group.

More preferably, the deposits consist of reaction products of MEA-triazine and hydrogen sulphide.

The organic compounds comprising at least one sulfhydryl group are especially chosen from mercaptans, thiocarboxylic acids and dithiocarboxylic acids, preferably mercaptans.

The mercaptans are typically those of formula RSH wherein R is an alkyl or alkenyl group containing from 1 to 8, preferably from 1 to 6 and more preferably from 1 to 4 carbon atoms.

Preferably, the additive composition is used to treat deposits containing reaction products of triazines, especially MEA-triazine, or reaction products of alkanolamine and formaldehyde, with hydrogen sulphide (H2S) and/or mercaptans, contained in a liquid and/or gaseous stream, preferably a hydrocarbon stream, more preferably a hydrocarbon gas stream.

Preferably, the additive composition is used to treat deposits containing reaction products of triazines, especially MEA-triazine, and hydrogen sulphide (H2S) and/or mercaptans, contained in a liquid and/or gaseous stream, preferably a hydrocarbon stream, more preferably a hydrocarbon gas stream.

More preferably, the additive composition is used to treat deposits containing reaction products of triazines, especially MEA-triazine, and hydrogen sulphide (H2S), contained in a liquid and/or gaseous stream, preferably a hydrocarbon stream, more preferably a hydrocarbon gas stream.

The liquid or gaseous stream may be a monophasic stream such as in particular an aqueous stream or an organic stream, or a multiphasic stream containing both water and hydrocarbons (such as for instance oil/water or oil/water/gas or gas/water).

The hydrocarbon containing streams are typically selected from crude petroleum oils, hydrocarbon fractions and residues deriving from the distillation thereof, light petroleum gas (LPG) and natural gas, as well as mixtures thereof with aqueous phases such as brine.

By "hydrocarbon stream" according to the invention, it is meant a stream, for example a gas stream, that contains mainly hydrocarbons but may contain a minor quantity of water, in particular in a content less than 1 % vol.

Such streams contain H₂S and/or mercaptans in total amounts which may range for example from 1 to 10 000 ppm by weight.

The hydrocarbon containing stream is preferably a hydrocarbon gas stream.

According to a preferred embodiment, the additive composition is used to treat deposits containing reaction products of triazines, especially MEA-triazine, or reaction products of alkanolamine and formaldehyde, with hydrogen sulphide (H2S) and/or organic compounds comprising at least one sulfhydryl group (-SH), contained in a liquid and/or gaseous stream, in at least one oil and/or gas installation.

According to a preferred embodiment, the additive composition is used to treat deposits containing reaction products of triazines, especially MEA-triazine, and hydrogen sulphide (H2S) and/or organic compounds comprising at least one sulfhydryl group (-SH), contained in a liquid and/or gaseous stream, in at least one oil and/or gas installation.

The oil and/or gas installation includes an equipment for oil and/or gas production, drilling, storage, completion and/or transportation.

According to a preferred embodiment, the additive composition is used to treat deposits containing at least reaction products of triazines, preferably MEA-triazine, and hydrogen sulphide (H2S), contained in a hydrocarbon gas stream, preferably in at least one sour gas production and treatment unit.

According to a preferred embodiment, the additive composition is used to reduce or remove deposits containing at least reaction products of triazines, preferably MEA-triazine, and hydrogen sulphide (H2S), contained in a hydrocarbon gas stream, preferably in at least one sour gas production and treatment unit.

According to a preferred embodiment, the additive composition is used to reduce or remove deposits containing at least reaction products of MEA-triazine and hydrogen sulphide (H2S), contained in a hydrocarbon gas stream, preferably in at least one sour gas production and treatment unit.

According to a preferred embodiment, the additive composition is used to reduce or remove deposits containing at least reaction products of MEA-triazine and hydrogen sulphide (H2S), contained in a hydrocarbon gas stream, in at least one sour gas production and treatment unit.

More preferably, said composition is used to treat, especially to reduce and/or remove, deposits as previously defined in at least one sour gas production and treatment unit, preferably a High-Pressure Cooler or a glycol contactor internal cooler (GCIC).

Even more preferably, said composition is used to treat, especially to reduce and/or remove deposits as previously defined in a glycol contactor internal cooler (GCIC).

The sour gas treatment unit is preferably a hydrogen sulphide containing gas treatment unit, especially a High-Pressure Cooler or a glycol contactor internal cooler (GCIC).

According to a preferred embodiment, said composition is used to treat, especially to reduce and/or remove deposits as previously defined in at least one sulfur-based species containing gas treatment unit in at least one oil and/or gas installation.

According to a preferred embodiment, said composition is used to treat, especially to reduce and/or remove deposits as previously defined in at least one hydrogen sulphide containing gas treatment unit in at least one oil and/or gas installation.

According to a preferred embodiment, said composition is used to treat, especially to reduce and/or remove, deposits as previously defined in at least one hydrogen sulphide containing gas treatment unit in at least one oil and/or gas installation, said hydrogen sulphide containing gas treatment unit being a High-Pressure Cooler or a glycol contactor internal cooler (GCIC).

According to a preferred embodiment, said composition is used to clean at least one sulfur-based species containing gas treatment unit in at least one oil and/or gas installation, especially a High-Pressure Cooler and a glycol contactor internal cooler (GCIC).

More preferably, said composition is used to clean at least one hydrogen sulphide containing gas treatment unit in at least one oil and/or gas installation, especially located upstream a High-Pressure Cooler and upstream glycol contactor internal cooler (GCIC).

Advantageously said composition is used to clean at least one surface, especially at least one metallic surface, of an at least one hydrogen sulphide containing gas treatment unit in at least one oil and/or gas installation.

According to a preferred embodiment, said composition is used to reduce contents of insoluble deposits as previously defined formed on at least one surface, especially at least one metallic surface, of an at least one hydrogen sulphide containing gas treatment unit in at least one oil and/or gas installation.

According to a preferred embodiment, said composition is used to protect at least one hydrogen sulphide containing gas treatment unit in at least one oil and/or gas installation against insoluble deposits as previously defined.

Another subject-matter of the present invention lies in the use of said additive composition to decrease the gradient pressure within at least one sour gas production and treatment unit as previously defined, especially a High-Pressure Cooler or a glycol contactor internal cooler (GCIC).

### Methods

Another subject-matter of the present invention relies on a method for treating deposits containing at least reaction products of triazines, especially MEA-triazine, or reaction products of alkanolamine and formaldehyde, and sulfur-based species, as previously defined, contained in a liquid and/or gaseous stream, comprising adding at least one additive composition as previously defined to an oil and/or gas installation.

In other words, the method of the present invention is for treating, especially for reducing, preventing and/or removing, the formation of deposits in the scavenging of hydrogen sulphide and/or organic compounds comprising at least one sulfhydryl group.

As previously defined, the deposits contain at least reaction products of triazines, preferably MEA-triazine, or reaction products of alkanolamine and formaldehyde, and hydrogen sulphide and/or organic compounds comprising at least one sulfhydryl group. Preferably, the deposits contain at least reaction products of MEA-triazine and hydrogen sulphide.

Preferably, said method is for reducing, preventing and/or removing the deposits as previously defined.

In other words, said method comprising injecting at least one additive composition as previously defined into at least one oil and/or gas installation.

Preferably, said method comprises adding at least one additive composition as previously defined to at least one sour gas treatment unit in at least one oil and/or gas installation.

More preferably, said method comprises adding at least one additive composition as previously defined to at least one sulfur-based species containing gas treatment unit in at least one oil and/or gas installation.

Even more preferably, said method comprises adding at least one additive composition as previously defined to at least one hydrogen sulphide (H2S) containing gas treatment unit in at least one oil and/or gas installation, especially to a High-Pressure Cooler and/or a glycol contactor internal cooler (GCIC).

According to a preferred embodiment, said method comprises adding at least one additive composition as previously defined upstream a High-Pressure Cooler and/or upstream glycol contactor internal cooler (GCIC), preferably upstream glycol contactor internal cooler (GCIC), in at least one oil and/or gas installation.

As described above, the liquid or gaseous stream may be monophasic such as in particular an aqueous stream or an organic stream, or multiphasic such as a stream containing both water and hydrocarbons (such as for instance oil/water or oil/water/gas or gas/water).

According to a preferred embodiment, the stream contains hydrocarbons. The stream may be especially selected from crude petroleum oils, hydrocarbon fractions and residues deriving from the distillation thereof such as in particular fuel oils and heavy fuel oils, light petroleum gas (LPG) and natural gas, as well as mixtures thereof with aqueous compositions such as brine.

Preferably, the liquid or gaseous stream is a hydrocarbon stream.

According to a preferred embodiment, said additive composition is injected into the liquid or gaseous stream as previously defined, especially into the hydrocarbon stream, circulating in said oil and/or gas installation.

Preferably, the additive composition is injected into the stream where the stream is in gas phase.

In a preferred embodiment, the method of the instant invention comprises injecting at least one additive composition as previously defined into a hydrocarbon gas stream, preferably a sour gas stream of a sour gas production and treatment unit, preferably of a gas installation, namely intended for natural gas production.

In a particularly preferred embodiment, the method of the instant invention comprises injecting at least one additive composition as previously defined into a sour gas stream of a sour gas production and treatment unit, namely for the production of natural gas.

Advantageously, said method of the instant invention comprises injecting at least one additive composition as previously defined upstream a sour gas stream of a sour gas production and treatment unit.

Still advantageously, said method comprises injecting at least one additive composition as previously defined upstream a High-Pressure Cooler and/or a glycol contactor internal cooler (GCIC), preferably upstream a glycol contactor internal cooler (GCIC).

Said additive composition may be injected at a rate from 100 to 5000 Liters per day (LPD), preferably at a rate from 1500 to 2000 Liters per day (LPD) in said at least one oil and/or gas installation. In concentration injection could be 100 ppm to 5000 ppm preferably at a rate from 1500 ppm to 2000 ppm per day (LPD) in said at least one oil and/or gas installation.

According to a preferred embodiment, said method further comprises adding at least one composition comprising at least one organic compound comprising one or more hydroxyl groups (-OH), especially chosen in the group constituting of monoalcools comprising from 1 to 4 carbon atoms, preferably methanol, diols, preferably glycol, and mixtures thereof.

According to this preferred embodiment, said composition comprises at least one organic compound comprising one or more hydroxyl groups (-OH) chosen in the group consisting of methanol, glycol and mixtures thereof.

According to this preferred embodiment, said composition comprises at least a mixture of methanol and glycol.

In other words, the method of the present invention may successively comprise:
(i) adding at least one additive composition as previously defined to said oil and/or gas installation,
(ii) adding at least one composition comprising at least one organic compound comprising one or more hydroxyl groups (-OH), especially chosen in the group consisting of monoalcools comprising from 1 to 4 carbon atoms, preferably methanol, diols, preferably glycol, and mixtures thereof, to said oil and/or gas installation.

According to a preferred embodiment, said method comprises successively:
(i) adding at least one additive composition as previously defined to said oil and/or gas installation,
(ii) adding at least one composition comprising at least a mixture of methanol and glycol to said oil and/or gas installation.

According to a preferred embodiment, said method comprises successively:
(i) adding at least one additive composition as previously defined to said at least one hydrogen sulphide containing gas treatment unit in said at least one oil and/or gas installation,
(ii) adding at least one composition comprising at least one organic compound comprising one or more hydroxyl groups (-OH), especially at least a mixture of methanol and glycol, to said at least one hydrogen sulphide containing gas treatment unit.

Another subject-matter of the present invention pertains to a method for cleaning deposits as previously defined in at least one sour gas production and treatment unit in at least one oil and/or gas installation.

Preferably, said method for cleaning deposits as previously defined in at least one hydrogen sulphide (H2S) containing gas treatment unit in at least one oil and/or gas installation.

The examples hereafter only aim at illustrating the present invention and shall not be interpreted so as to limit its scope.

### EXAMPLES

### Example 1: Assessment of the cleaning properties

### Tested additive composition

An additive composition (A1) according to the present invention comprises 10% of weight of oleic acid (a), 30 % of weight of acid acetic (b), and 60% of weight of the HAN solvent (c), in respect to the total weight of the additive composition, is prepared.

### Protocol

The cleaning properties of the additive composition (A1) are assessed in a field test by injecting said composition into the gas treatment unit of an oil installation.

A formulation containing MEA-triazine was first injected in a glycol contactor internal cooler (GCIC).

The additive composition (A1) was injected online for some hours at 1500 LPD (litters per day) and 2000 LPD (litters per day) upstream a glycol contactor internal cooler (GCIC).

Following the injection of the additive composition (A1), a mixture of methanol/glycol was injected upstream the glycol contactor internal cooler to wash the cooler.

The delta pressure within the glycol contactor internal cooler (GCIC) was assessed together with the contents of deposits in said glycol contactor internal cooler before injecting the additive composition (A1) and after injecting the mixture of methanol/glycol.

### Results of delta pressure within GCIC

The results display the delta pressure drops when injecting the additive composition which means that deposits contents of reaction products between MEA-triazine and hydrogen sulphide have been significantly reduce.

### Analysis of H2S scavenger residuals

The obtained samples were sent onshore for analysis of H2S scavenger residuals (assessment of dithiazine, a-DTZ and formaldehyde residuals).

A sample was taken before and after injecting the additive composition (A1).

The sample taken before injecting the additive composition has a light orange colour which means most of the deposits resulting from the reaction between MEA-triazine and hydrogen sulphide remain on the surfaces of the liners or conducts of the glycol contactor internal cooler (GCIC).

The sample taken after injecting the additive composition has a dark orange colour which means most of the deposits resulting from the reaction between MEA-triazine and hydrogen sulphide have been retrieved from the surfaces of the conducts of the GCIC and rest at the bottom of the sample.

It bespeaks that the implementation of the additive composition (A1) allows the removal of the deposits containing reaction products between MEA-triazine and hydrogen sulphide in the glycol contactor internal cooler (GCIC).

## Claims

1. Use of at least one additive composition for treating deposits containing at least reaction products of triazines or reaction products of alkanolamine and formaldehyde and hydrogen sulphide and/or organic compounds comprising at least one sulfhydryl group, contained in a liquid and/or gaseous stream, said composition comprising:
(a) at least one fatty carboxylic acid comprising at least one fatty chain containing at least 8 carbon atoms, and
(b) at least one mono- or polycarboxylic acid comprising at least one hydrocarbon chain containing from 1 to 7 carbon atoms,
(c) at least one organic solvent.

2. Use according to claim 1, wherein (a) said at least one fatty carboxylic acid has a fatty chain comprising from 8 to 30 carbon atoms, preferably from 12 to 24 carbon atoms, more preferably from 12 to 20 carbon atoms, and even more preferably from 14 to 20 carbon atoms.

3. Use according to claim 1 or 2, wherein (a) said fatty carboxylic acid is a bio-based compound, preferably a vegetable-based compound.

4. Use according to any of the preceding claims, wherein (a) said at least one fatty carboxylic acid is chosen among the group consisting of oleic acid, linoleic acid, arachidonic acid, isostearic acid, isopalmitic acid, and mixtures thereof, preferably oleic acid.

5. Use according to any of the preceding claims, wherein (b) said at least one mono- or polycarboxylic acid is chosen among the group consisting of propionic acid, acetic acid, propanedioic acid, pentanedioic acid, butanedioic acid, ethanedioic acid, or mixture thereof, especially chosen among the group consisting of monocarboxylic acid, and more preferably from propionic acid, acetic acid, or mixture thereof, specifically acetic acid.

6. Use according to any of the preceding claims, wherein said at least one fatty carboxylic acid (a) and said at least one mono-or polycarboxylic acid (b) are present in a ratio by mass (a):(b) ranging from more than 50:50 to 5:95, preferably from 40:60 to 10: 90, more preferably from 30:70 to 15:85, even more preferably is in a ratio of 25/75 .

7. Use according to any of the preceding claims, wherein (c) said organic solvent is an aromatic solvent, especially the aromatic is a Heavy Aromatic Naphta (HAN) solvent.

8. Use according to any of the preceding claims, wherein said mixture of carboxylic acids (a) + (b) and the organic solvent is in a ratio by mass (a)+(b):(c) ranging from 20/80 to 90/10, in particular 45/55 to 20/80 and more particularly 45/55 to 20/80 , especially 40/60 to 30/70.

9. Use according to any of the preceding claims, wherein the deposits contain at least reaction products of MEA-triazine and hydrogen sulphide contained in a liquid and/or gaseous stream.

10. Use according to any of the preceding claims, wherein the liquid and/or gas stream is a gaseous stream, preferably a hydrocarbon gas stream, in an at least one sour gas production and treatment unit.

11. Use according to the preceding claim, wherein the at least sour gas production and treatment unit is a High-Pressure Cooler or a glycol contactor internal cooler (GCIC), especially a glycol contactor internal cooler (GCIC).

12. A method for treating deposits containing at least reaction products of triazines, especially MEA-triazine, or reaction products of alkanolamine and formaldehyde, and hydrogen sulphide and/or organic compounds comprising at least one sulfhydryl group, contained in a liquid and/or gaseous stream, comprising adding at least one additive composition as defined in any of the claims 1 to 9, to an oil and/or gas installation.

13. Method according to claim 12, wherein said composition is injected into the stream, where the stream is in gas phase.

14. Method according to claim 12 or 13, wherein said composition is injected into a hydrocarbon gas stream, preferably a sour gas stream of a sour gas production and treatment unit.

15. Method according to the preceding claim, wherein said composition is injected upstream a sour gas stream of a sour gas production and treatment unit.

16. Use of at least one additive composition as defined according to any of the claims 1 to 9 to decrease the gradient pressure within at least one sour gas production and treatment unit, especially a High-Pressure Cooler or a glycol contactor internal cooler (GCIC).
